Europäisches Patentamt

European Patent Office

Office européen des brevets

(19)

(11) Publication number: **0 138 584**
A2

(12)

# EUROPEAN PATENT APPLICATION

(21) Application number: 84306955.0

(22) Date of filing: 11.10.84

(51) Int. Cl.⁴: **H 04 B 9/00**, H 04 B 14/00

(30) Priority: 20.10.83 JP 197094/83

(43) Date of publication of application: 24.04.85
Bulletin 85/17

(84) Designated Contracting States: DE FR GB

(71) Applicant: **SEIKO INSTRUMENTS & ELECTRONICS LTD., 31-1, Kameido 6-chome, Koto-ku Tokyo (JP)**
Applicant: **Sasaki, Issei, 15-402, Hanakawa-Chuo-Danchi 3-3-4, Hanakawa-Kita Ishikari-machi, ishikari-gun Hokkaido (JP)**

(72) Inventor: **Sasaki, Issei 15-402, Hanakawa-Chuo-Danchi, 3-3-4, Hanakawa-Kita Ishikari-machi, Ishikari-gun Hokkaido (JP)**

(74) Representative: **Caro, William Egerton et al, J. MILLER & CO. Lincoln House 296-302 High Holborn, London WC1V 7JH (GB)**

(54) Self referring type of optical communication system.

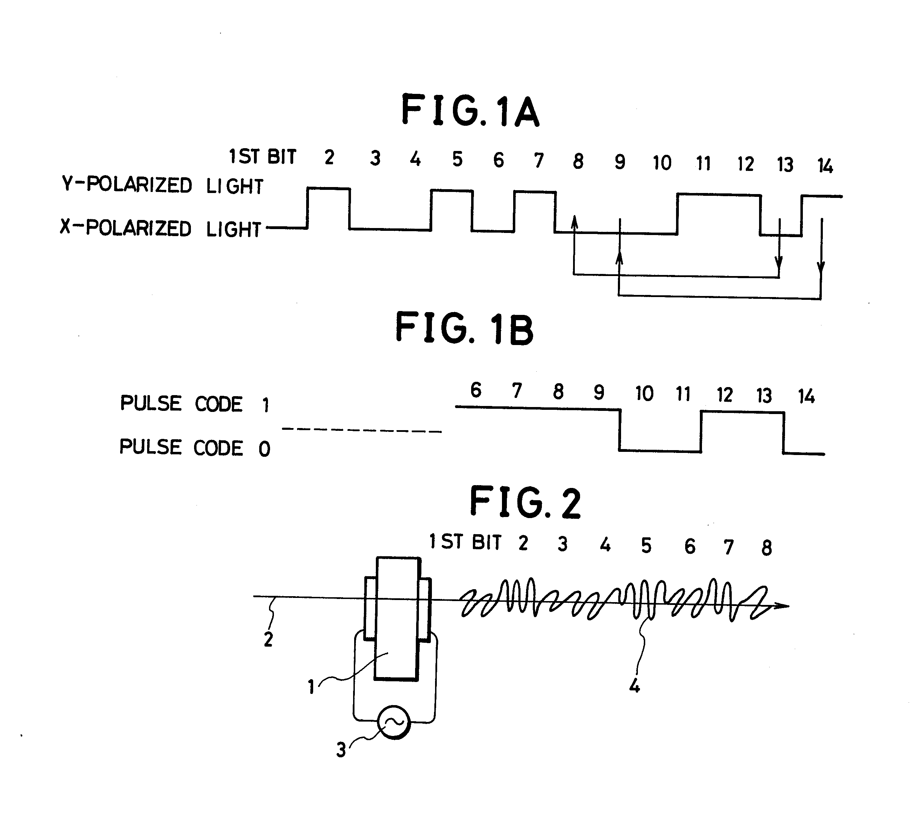

(57) A self-referring type of optical communication system for a pulse code modulation optical system is such that when the presence or absence of pulses (Figure 1A) forms a signal according to polarisation wave angles, reference is made to the polarisation wave angle of a pulse a predetermined number of bits earlier than the given pulse, and a pulse code is determined from whether or not these polarisation wave angles match.

EP 0 138 584 A2

-1-

## SELF-REFERRING TYPE OF OPTICAL COMMUNICATION SYSTEM

This invention relates to self-referring types of optical communication systems that transmit signals according to the angles of polarised waves.

Modulation methods using polarisation wave angles are known. When applied to optical communication systems, however, the following problem occurs. Since the wave angle of polarised light is used as a signal, an optical fibre used as a communication medium must be able to propagate the light while preserving this polarisation wave angle. However, existing polarisation front preservation fibres which accomplish this have the property that the two different polarised waves have widely differing transmission velocities. This is a crucial problem in polarisation wave angle modulation.

The present invention seeks to provide a self-referring type of optical communication system which does not require this preservation of the polarisation wave front.

According to the present invention there is provided a self-referring type of optical communication system for a pulse code modulation optical system characterised in that when the presence or absence of pulses forms a signal according to polarisation wave angles, reference is made to the polarisation wave angle of a pulse a predetermined number of bits earlier than a given pulse, and a pulse code is determined from whether or not these polarisation wave angles match.

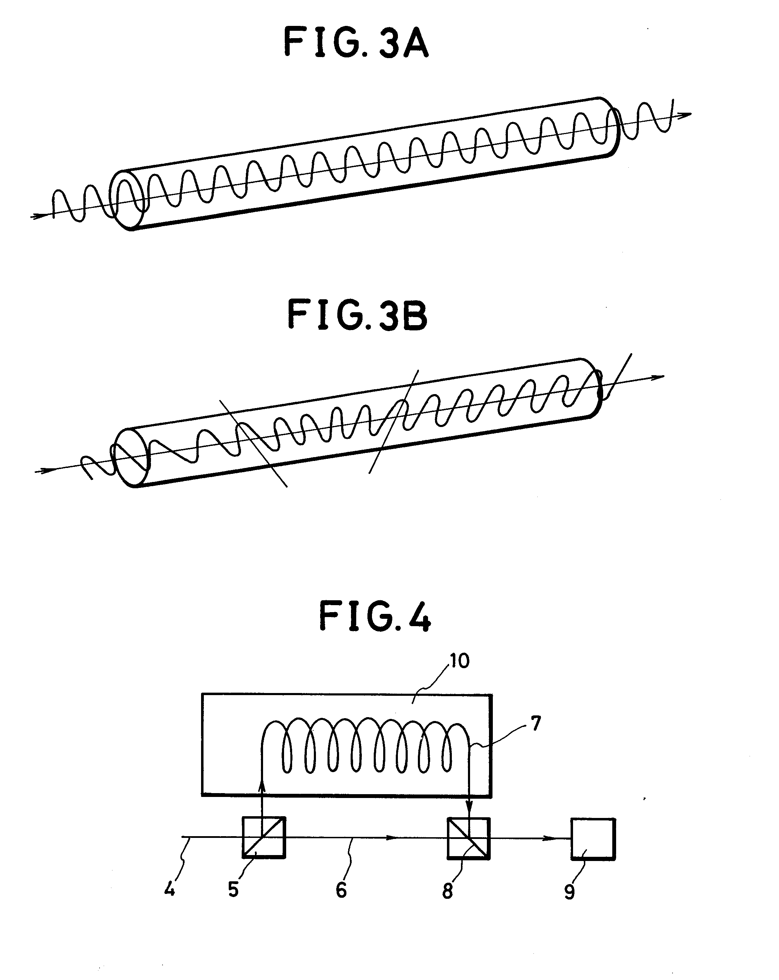

Preferably a multi-mode or single-mode fibre or a polarised-wave preservation fibre is used as a communication medium (Fig. 3B).

An optical delay module may be used for making said reference. Said optical delay module, in the preferred embodiment, consists of a short optical fibre and a long optical fibre.

Preferably optical interference between a given signal and a delayed signal is utilised in order to determine whether or not said polarisation wave angles match.

A predetermined optical delay time may be used as a key for reproduction.

The invention is illustrated, merely by way of example, in the accompanying drawings, in which:-

Figure 1A shows an optical signal pulse train used in a self-referring type of optical communication system according to the present invention;

Figure 1B shows a pulse code train of a self-referring type of optical communication system according to the present invention;

Figure 2 shows an apparatus for modulating the polarisation wave angle in the self-referring type of optical communication system according to the present invention;

Figure 3A shows a conventional polarisation wave angle preservation fibre;

Figure 3B shows a polarisation wave preservation fibre used for a self-referring type of optical communication system according to the present invention; and

Figure 4 shows an optical delay module used in a self-referring type of optical communication system according to the present invention.

The present invention will now be described in detail with reference to the accompanying drawings. Fig.1A illustrates the principle of a self-referring type of optical communication system according to the present invention. An optical signal pulse train is formed bit by bit from polarisation wave angles of linearly-polarised light. Assuming now that the first bit of the optical signal pulse train concerns linearly-polarised light polarised in the X direction (hereinafter called "X-polarised light"), the second bit of the optical signal pulse train concerns linearly-polarised light polarised in the Y direction (hereinafter called the "Y-polarised light"). The third and fourth bits of the optical signal pulse train concern Y-polarised light, and the fifth bit of the signal concerns X-polarised light. Thus, the optical signal pulse train of Figure 1A is a pulse train that is formed by the polarisation directions of linearly-polarised light waves that are at right angles to each other. In other words, it is obtained by modulating the polarisation directions of the linearly-polarised light bit by bit.

The method of deciding the code ("0" or "1") assigned to each bit is as follows. The present invention employs a so-called "self-referring system", and is characterised in that when a pulse code of a given bit formed by a polarisation wave angle is read out, reference is made to the polarisation wave angle of a bit of the optical signal pulse train a predetermined number of bits earlier than the given bit, and if their polarisation wave angles match, the logic value is determined to be "1", but when they cross each other at right angles, the logic value is determined to be "0", to determine the pulse code. Other methods of determining the pulse code may, of course, be employed.

With specific reference to Figure 1A, in this example, reference is made to the eighth bit, five bits earlier than the thirteenth bit, in order to determine the pulse code of the thirteenth bit. This predetermined number of bits is not limited to five. As soon as the eighth bit of the optical signal pulse train concerns an X-polarised wave and the thirteenth bit also concerns an X-polarised wave, so that they match, the pulse code of the thirteenth bit is determined to be "1". The pulse code of the fourteenth bit is determined by referring to the ninth bit which is five bits earlier. Since the ninth bit of the optical signal pulse train concerns an X-polarised wave but the fourteenth bit concerns a Y-polarised wave, the polarisation directions thereof are at right angles to each other. Therefore, the pulse code of the fourteenth bit is determined to be "0". The pulse code of each bit is determined in this manner, as shown in Figure 1B.

Next the method of preparing the X-polarised wave angle of the optical signal pulse train of Figure 1A will be described. A polarised wave modulation element 1 utilises the Pockels' effect and is made, for example, of a material such as KDP. A beam of light is instant on the modulation element 1. Electric signals are

-4-

applied from an electric signal source 3 to the modulation element during the period of each bit, to obtain a polarised wave-modulated pulse train 4.

A communication medium transmitting the polarised wave-modulated pulse train will now be described. An optical fibre is usually used as the communication medium but a problem is encountered when transmitting polarised light thereby. In an ordinary optical fibre, a rotation of the polarised wave angle and a change of state of the polarised wave occurs so that the transmission efficiency drops if data is contained in the polarised wave angles. When a polarisation wave angle preservation optical fibre as shown in Figure 3A is used, on the other hand, linearly-polarised light is preserved without any rotation of the polarisation wave angle. However, such a polarisation wave angle preservation optical fibre has the property that the transmission velocity of two polarised waves that are polarised at right angles to one another differ widely. This is not desirable in polarised-wave modulation. In contrast, in a self-referring type of optical communication system according to the present invention, the use of a preservation optical fibre such as that shown in Figure 3B is preferred.

The polarisation of wave angle preservation optical fibre has a property such that if polarised light propagating therethrough is linearly-polarised, the optical fibre preserves this linearly-polarised state, and if the polarised light is circularly-polarised light, the optical fibre preserves this circularly-polarised state (e.g. a span fibre). However, the optical fibre does not have the function of controlling the polarised wave angle of the linearly-polarised light, so that rotation of the polarisation wave angle angle occurs. This has been the problem up to now with polarisation wave angle modulation.

The self-referring type of optical communication system according to the present invention solves this problem. Even if the wave angle of polarised light rotates during the propagation of an optical signal through the optical fibre of Figure 3B, the rotation is relatively slow in comparison with the bit rate of the optical signal pulse train. Moreover, since the self-referring type of optical communication system of the present invention refers to a pulse bit several bits earlier than the pulse of the current bit, rotation of the polarisation wave angle during the period of time containing the two pulses can be ignored. Therefore, the present invention can completely solve the problems described above by the use of the polarised wave preservation fibre as the communication medium.

Means used for performing this self-reference in practice will now be described. Figure 4 shows an optical delay module used for this purpose. The polarisation wave-modulated pulse train 4 incident on the optical delay module is split by a beam splitter 5, one of the signals thus split passing through a short optical fibre 6, and the other passing through an extremely long optical fibre 7. The split signals are then mixed by an optical mixer 8. A delay of a predetermined number of bits is generated in the split signal passing through the long optical fibre 7 between the beam splitter 5 and the optical mixer 8, because of the difference in length of transmission paths. In other words, the light of a current bit and the light of a bit a predetermined number of bits before the current bit are mixed by the optical mixer 8, and the intensity of the interference generated thereby is detected by an optical detector 9. If the two split signals mixed in this way have the same angles of polarisation, they interfere with each other and the detector detects this strong intensity, providing "1" as the pulse code.

The number of delay bits must be precisely controlled, so that the temperature of the long optical fibre 7 must be kept constant by a temperature controller 10. The short fibre 6 may be omitted, the beam splitter 5 being directly connected to the optical mixer 8.

The self-referring type of optical communication system according to the present invention and described above provides the effect that a polarisation wave angle modulation type of optical communication system can be formed by using a polarised-wave preservation fibre, which is relatively inexpensive and has a low loss, as the optical communication medium thereof.

-7-

CLAIMS

1.    A self-referring type of optical communication system for a pulse code modulation optical system characterised in that when the presence or absence of pulses forms a signal according to polarisation wave angles, reference is made to the polarisation wave angle of a pulse a predetermined number of bits earlier than a given pulse, and a pulse code is determined from whether or not these polarisation wave angles match.

2.    A self-referring type of optical communication system as claimed in claim 1 characterised in that a multi-mode or single-mode fibre or a polarised-wave preservation fibre is used as a communication medium (Figure 3B).

3.    A self-referring type of optical communication system as claimed in claim 1 or 2 characterised in that an optical delay module (6, 7) is used for making said reference.

4.    A self-referring type of optical communication system as claimed in claim 3 characterised in that said optical delay module consists of a short optical fibre (6) and a long optical fibre (7).

5.    A self-referring type of optical communication system as claimed in any preceding claim characterised in that optical interference between a given signal and a delayed signal is utilised in order to determine whether or not said polarisation wave angles match.

6.    A self-referring type of optical communication system as claimed in any preceding claim characterised in that a predetermined optical delay time is used as a key for reproduction.

1/2

# FIG.1A

|  | 1ST BIT | 2 | 3 | 4 | 5 | 6 | 7 | 8 | 9 | 10 | 11 | 12 | 13 | 14 |

Y-POLARIZED LIGHT

X-POLARIZED LIGHT

# FIG. 1B

|  |  | 6 | 7 | 8 | 9 | 10 | 11 | 12 | 13 | 14 |

PULSE CODE 1

PULSE CODE 0

# FIG. 2

| 1ST BIT | 2 | 3 | 4 | 5 | 6 | 7 | 8 |

1

2

3

4

# FIG. 3A

# FIG. 3B

# FIG. 4